(19) **Europäisches Patentamt**
**European Patent Office**
**Office européen des brevets**

(11) Veröffentlichungsnummer: **0 287 947 B1**

(12) # EUROPÄISCHE PATENTSCHRIFT

(45) Veröffentlichungstag der Patentschrift: **11.03.92**

(51) Int. Cl.⁵: **C08G 18/79**, C08G 18/67, C08G 18/32, C09D 135/00, C09D 175/04

(21) Anmeldenummer: **88105928.1**

(22) Anmeldetag: **14.04.88**

(54) **Verfahren zur Herstellung von Überzügen mit Hydantoin-Strukturen durch Umsetzung Carbodiimidgruppen enthaltender Verbindungen mit ungesättigten Carbonsäuren.**

(30) Priorität: **24.04.87 DE 3713670**

(43) Veröffentlichungstag der Anmeldung:
**26.10.88 Patentblatt 88/43**

(45) Bekanntmachung des Hinweises auf die Patenterteilung:
**11.03.92 Patentblatt 92/11**

(84) Benannte Vertragsstaaten:
**AT CH DE ES FR GB IT LI NL SE**

(56) Entgegenhaltungen:
**DE-A- 3 144 701**
**US-A- 4 374 221**

**Chemical Abstracts, Bd. 100, Nr. 18, 30. April 1984, Seite 92, Spalte 2, Zusammenfassung Nr. 140921j, Columbus, Ohio, US; & JP - A - 83163478**

(73) Patentinhaber: **BAYER AG**

**W-5090 Leverkusen 1 Bayerwerk(DE)**

(72) Erfinder: **Dünwald, Willi, Dr.**
**Geschwister-Scholl-Strasse 16**
**W-5090 Leverkusen(DE)**
Erfinder: **Schlegel, Hans**
**Habichtgasse 4**
**W-5090 Leverkusen(DE)**
Erfinder: **Halpaap, Reinhard, Dr.**
**Kleinfeldchensweg 37b**
**W-5000 Köln 91(DE)**
Erfinder: **Pedain, Josef, Dr.**
**Haferkamp 6**
**W-5000 Köln 80(DE)**

EP 0 287 947 B1

**Beschreibung**

Die Erfindung betrifft ein Verfahren zur Herstellung von Überzügen aus Polymeren mit Hydantoinring-Strukturen durch Umsetzung von blockierten Isocyanaten mit Carbodiimid- und/oder Uretonimingruppen mit $\alpha,\beta$-ungesättigten Dicarbonsäuren oder Dicarbonsäure-Derivaten, wobei man die zu den Polymeren führende Reaktion auf den mit den Überzügen zu versehenden Substraten ablaufen läßt.

Es ist bekannt, daß man substituierte Hydantoine erhält, wenn $\alpha,\beta$-ungesättigte Carbonsäure-Derivate mit Isocyanaten umgesetzt werden (DE-OS 2 654 112) und daß Verbesserungen der hergestellten Produkte möglich sind, wenn die eingesetzten Isocyanate vor der Herstellung der Hydantoine in Carbodiimide umgewandelt werden (z.B. DE-OS 3 144 700 und 3 247 350). Die Polyhydantoine können z.B. als wärmebeständige Kunststoffe, insbesondere auf dem Elektroisoliersektor verwendet werden (z.B. FR-PS 1 484 694).

Aus der DE-OS 3 247 350 ist bekannt, daß teilweise mit Lactamen blockierte Isocyanate zu Carbodiimiden umgewandelt und diese mit $\alpha,\beta$-ungesättigten Carbonsäuren zu Polyhydantoinen umgesetzt werden. Dabei wird die $\alpha,\beta$-ungesättigte Verbindung langsam und unter Kühlen zugegeben. Es war deshalb nicht zu erwarten, daß aus den erfindungsgemäßen Komponenten Mischungen herstellbar sind, die bei Normaltemperatur lagerstabil sind.

Bei der Erzeugung von Filmen und Überzügen besteht generell die Problematik, daß von größeren Moleküleinheiten ausgegangen werden muß, damit beim Einbrennprozeß zur Ausbildung des den Überzug bzw. Film bildenden Polymeren nur relativ wenig Verknüpfung- bzw. Vernetzungsreaktionen notwendig sind, die innerhalb kürzester Zeit ablaufen können. Das bedingt eine hohe Viskosität und damit geringeren Feststoffgehalt der Lacklösung. Bei Verbindungen mit niedermolekularen Einheiten müssen mehr Vernetzungs-bzw. Verknüpfungsreaktionen ablaufen, was einen größeren Zeitbedarf bedingt, der nicht einfach durch Temperaturerhöhung kompensiert werden kann, weil Blasenbildung oder Oberflächenstörung auftreten können. Eine andere Möglichkeit, den Lack aus Vorstufen geringer Molekülgröße aufzubauen und so einen niedrigviskosen Lack mit höherem Gehalt filmbildenden Materials zu erhalten, wäre eine starke Steigerung der Reaktivität durch spezielle Katalysatoren, was aber die Viskosität während der kontinuierlichen Verarbeitung ungünstig beeinflußen kann.

Es wurde nun gefunden, daß es möglich ist, ausgehend von niedermolekularen Ausgangsmaterialien ohne den aufwendigen Herstellprozeß einer Zwischenpolymerstufe zum Polymerlackfilm direkt auf dem Substrat zu gelangen.

Gegenstand der Erfindung ist ein Verfahren zur Herstellung von Überzügen auf Basis von Hydantoinringe enthaltenden Polymeren auf hitzeresistenten Substraten, wobei $\alpha,\beta$-ungesättigte Dicarbonsäuren bzw. deren Derivate mit blockierten, Carbodiimidgruppen und/oder Uretonimingruppen enthaltenden Isocyanaten unter Einhaltung solcher Mengenverhältnisse der Reaktionspartner, daß sich die Summe der Äquivalente der Carbodiimidgruppen und der Uretonimingruppen der blockierten Polyisocyanate zu der Anzahl der Äquivalente der $\alpha,\beta$-ungesättigten Dicarbonsäuren oder Dicarbonsäure-Derivaten wie 0,1:1 - 10:1 verhält, vorzugsweise in Gegenwart eines Katalysators bei Temperaturen von 50 bis 700° C, vorzugsweise 80 bis 500° C umgesetzt werden, dadurch gekennzeichnet, daß man die zur Ausbildung eines Polymerfilms oder -überzuges führende Umsetzung direkt auf dem Substrat durchführt.

Das erfindungsgemäße Verfahren stellt einen erheblichen Fortschritt dar. Es vermeidet das zeit- und energieaufwendige Herstellen von Zwischenstufen, aus denen vor Erzeugung des herzustellenden Polymeren zunächst verarbeitungsfähige niedrigviskose Lösungen mit geringem Festkörpergehalt hergestellt werden müssen.

Aus den erfindungsgemäßen Mischungen können Filme und Überzüge von außerordentlicher Härte und verbesserter Lösemittelbeständigkeit, z.B. gegenüber Styrol, hergestellt werden. Die elektrischen Eigenschaften sind gut; die Kurve tan $\delta$ als Funktion der Temperatur (Messung nach VDE 0303/Teil 4) hat einen erst bei hohen Temperaturen ansteigenden Verlauf.

Die für das erfindungsgemäße Verfahren geeigneten blockierten, Carbodiimidgruppen- und/oder Uretonimingruppen-haltigen Polyisocyanate sind z.B. die in der DE-OS 3 600 766 beschriebenen. Der Gehalt dieser Verbindungen an Carbodiimidgruppen (berechnet als -N=C=N-) liegt im allgemeinen bei 0 bis 25 Gew.-%, vorzugsweise 1 bis 20 Gew.-%, ihr Gehalt an Uretonimingruppen (berechnet als Struktureinheiten der Bruttoformel $C_2N_3O$) liegt im allgemeinen bei 0 bis 30 Gew.-%, vorzugsweise bei 0 bis 25 Gew.-%, wobei die Summe aus Carbodiimid- und Uretonimingruppen (formal berechnet als -N=C=N-) im allgemeinen bei 0,5 bis 25 Gew.-%, vorzugsweise bei 1 bis 20 Gew.-%, liegt, und der Gehalt an blockierten Isocyanatgruppen (berechnet als NCO) liegt im allgemeinen bei 1 bis 25 Gew.-%, vorzugsweise bei 5 bis 22 Gew.-%.

Die für das erfindungsgemäße Verfahren geeigneten $\alpha,\beta$-ungesättigten Dicarbonsäuren sind z.B. Maleinsäure oder Fumarsäure. Geeignete $\alpha,\beta$-ungesättigte Dicarbonsäurederivate sind z.B. in der DE-OS 3 247 350 beschrieben. Bevorzugt werden als derartige Carbonsäurederivate Maleinsäure-monoalkylester mit 1 bis 4 Kohlenstoffatomen im Alkylrest oder Maleinsäure-monoamide mit N,N-disubstituierten Amidgruppen verwendet, wobei die Substituenten der Amidgruppen vorzugsweise Alkylreste mit 1 bis 4 Kohlenstoffatomen darstellen. Ebenfalls geeignet, jedoch weniger bevorzugt, sind die entsprechenden Derivate der Fumarsäure.

Das erfindungsgemäße Verfahren umfaßt die Herstellung von Lackierungen, wobei hitzeresistente Substrate, insbesondere Metalle oder Glasgewebe in Betracht kommen. Bevorzugt werden Drahtlackierungen hergestellt.

Bei dem erfindungsgemäßen Verfahren kommen die Reaktionskomponenten in solchen Mengenverhältnissen zum Einsatz, daß sich die Summe der Äquivalente der Carbodiimidgruppen und der Uretoningruppen der erfindungsgemäß einzusetzenden blockierten Polyisocyanate zu der Anzahl der Äquivalente der $\alpha,\beta$-ungesättigten Dicarbonsäuren oder Dicarbonsäure-Derivaten wie 0,1:1 bis 10:1, vorzugsweise 0,2:1 bis 4:1 und besonders bevorzugt wie 0,5:1 bis 2,5:1 verhält.

Dabei können die Eigenschaften der erhaltenen Kunststoffe und Lackierungen durch das jeweils angewendete Mengenverhältnis gesteuert werden.

Entsprechend dem Gehalt an blockierten Isocyanatgruppen der erfindungsgemäß verwendeten Carbodiimidgruppen und/oder Uretoningruppen enthaltenden blockierten Polyisocyanate können gegebenenfalls als Reaktionspartner neben den erfindungswesentlichen $\alpha,\beta$-ungesättigten Carbonsäurederivaten noch niedermolekulare mehrwertige Alkohole mitverwendet werden. Dies stellt eine weitere Möglichkeit der Eigenschaftssteuerung dar.

Dabei werden die niedermolekularen mehrwertigen Alkohole bis zu solchen Mengenverhältnissen mitverwendet, daß sich die Äquivalente der Hydroxylgruppen der Polyole zu den Äquivalenten der blockierten Isocyanatgruppen einschließlich der Äquivalente der gegebenenfalls auch vorliegenden Uretoningruppen, wie 0 bis 10:1, vorzugsweise 0 bis 2:1 und besonders bevorzugt wie 0 bis 1,2:1 verhalten.

Die niedermolekularen mehrwertigen Alkohole können dabei, besonders wenn sie in fester Form vorliegen, auch als "Assoziate" gemeinsam mit $\epsilon$-Caprolactam verwendet werden (K. Wagner, Angewandte Makromolekulare Chemie, 37, S. 59 ff. 1974). Dabei werden Alkohol zu $\epsilon$-Caprolactam in der Regel im Molverhältnis von 1:1 eingesetzt; es ist jedoch auch möglich Lösungen der festen Alkohole in den "Assoziaten" zu verwenden (Überschuß an Alkohol, beispielsweise bis zu einem Molverhältnis von 4:1).

Geeignete niedermolekulare mehrwertige Alkohole sind solche mit einem unter 400 liegenden Molekulargewicht und 2 bis 4 Hydroxylgruppen, wie sie z.B. in der DE-OS 6 beschrieben sind.

Die erfindungsgemäß verwendbaren Mischungen können direkt oder in Verbindung mit einem geeigneten Lösungsmittel als Lack verwendet werden.

Geeignete Lösemittel sind z.B. in der DE-OS 3 600 766 genannt. Gut geeignet sind beispielsweise Methoxypropylacetat, Kresol oder Xylol bzw. aus derartigen Lösungsmitteln bestehende Gemische. Die Aushärtung der erfindungsgemäßen Reaktionsprodukte kann neben der Variation von Temperatur und deren Einwirkungszeit durch Zugabe von Katalysatoren beeinflußt werden. Geeignete Katalysatoren sind z.B. in der DE-OS 3 600 766 genannt. Geeignet sind beispielsweise Umsetzungsprodukte von Aminen mit Carbonylverbindungen beispielsweise Aldimine auf Basis aliphatischer Aldehyde wie z.B. Butyraldehyd und aromatische Amine wie z.B. Anilin oder Metallverbindungen wie Zinnoctoat oder Zinkoctoat.

Die beim erfindungsgemäßen Verfahren zum Einsatz gelangenden, im wesentlichen aus den beschriebenen Reaktionsgemischen bestehenden Beschichtungsmittel können nach beliebigen Methoden der Beschichtungstechnologie wie z.B. Spritzen, Streichen oder Tauchen auf die zu beschichtenden Substrate aufgetragen werden. Geeignete Hitze-resistente Substrate sind beispielsweise Metalle, insbesondere Metalldrähte. Dies bedeutet, daß sich das erfindungsgemäße Verfahren insbesondere zur Herstellung von Drahtlackierungen eignet.

Die Herstellung der Lackfilme aus den beschriebenen Reaktionsgemischen erfolgt durch Erhitzen der beschichteten Substrate auf Temperaturen von 50 bis 700 °C, vorzugsweise 80 bis 500 °C.

Die erfindungsgemäß hergestellten Überzüge zeichnen sich durch ihre Temperaturbeständigkeit, hohen tan $\delta$ Knickpunkt (Messung nach VDE 0303/Teil 4) und Beständigkeit gegenüber Lösungsmitteln (z.B. Styrol) aus. Weiterhin können die erfindungsgemäß hergestellten Lacklösungen mit anderen Polymeren, z.B. Polyestern, Polycarbonaten, Polyamidimiden u.s.w. in weiten Grenzen abgemischt werden.

In den nachfolgenden Beispielen beziehen sich alle Prozentangaben auf das Gewicht.

Beispiele

Herstellung eines Carbodiimidgruppen-haltigen blockierten Polyisocyanats I (nach DE-OS 3 600 766):

Eine Mischung aus 174 g 2,4-Diisocyanatotoluol und 2,6-Diisocyanatotoluol (Gewichtsverhältnis 8:2) und 250 g 4,4'-Diisocyanatodiphenylmethan wird beginnend bei 80 °C innerhalb ca. 30 Minuten mit 216 g Kresol (technisches Isomerengemisch) versetzt und 6 Stunden bei 120°C gehalten. Nach Erreichen eines NCO-Gehalts von 13,0 % ($NCO_{theor.}$ = 13,1 %) wird mit 256 g 1-Methoxypropyl-2-acetat verdünnt.

Man katalysiert die Carbodiimidbildung durch Zugabe von 2 g Methylphospholinoxid (einem technischen Gemisch aus 1-Methyl-1-phospha-2-cyclopenten-1-oxid und 1-Methyl-1-phospha-3-cyclopenten-1-oxid) bei 60°C. Nach ca. 15 Stunden waren 22 l $CO_2$ abgespalten (ca. 92 %).

Man erhält die Lösung eines blockierten Polyisocyanats mit folgenden Kenndaten:

Konzentration: ca. 70 %ig
Viskosität: $\eta$(23°C) = 28.000 mPas
freier NCO-Gehalt: <0,1 %
block. NCO-Gehalt: (berechnet) 9,9 %
NCN-Gehalt: (berechnet) 4,7 %

## Beispiel 1

850 g des Polyisocyanats I und 130 g Maleinsäuremonomethylester werden in 228 g Methoxypropylacetat gelöst. Der Festkörpergehalt beträgt 60 %. Die Durchlaufzeit im DIN-Becher, 4 mm, bei 23°C beträgt 150 Sekunden.

Eine Probe dieser Lösung wird auf ein Prüfblech aufgestrichen und 30 Minuten bei 200°C zu einem klaren Film eingebrannt. Der tan $\delta$, gemessen nach VDE 0303/Teil 4, liegt über 300°C. Die Styrolbeständigkeit wurde geprüft, indem ein Streifen des lackierten Bleches 2 Stunden in Monostyrol von 120°C gelagert wurde. Danach wurde die Bleistifthärte (DIN 46 453, 12.3) bestimmt. Die Bleistifthärte des Lackfilmes war nach dieser Behandlung unverändert 4 H.

## Beispiel 2

850 g des Polyisocyanats I werden mit 260 g Maleinsäuremonomethylester in 1.028 g Kresol/Xylol (1:1 Gew.-Teile) gelöst. Der Lösung werden 1 % eines Aldimins aus Anilin/Butyraldehyd als Katalysator, berechnet auf den Festkörpergehalt, zugesetzt. Der Festkörpergehalt beträgt 40 %. Die Durchlaufzeit im DIN-Becher, 4 mm, bei 23°C beträgt 17 Sekunden. Die Lacklösung wird in einem Vertikalofen von 4 m Länge bei einer Ofentemperatur von 400°C auf einen Cu-Draht von 0,7 mm ∅ bis zu einer Durchmesserzunahme von 50 bis 60 µm appliziert. Man erhält in einem weiten Fahrbereich (8 bis 23 m/min) einen Cu-Lackdraht mit ausgezeichneten Eigenschaften:
tan $\delta$ (gemessen nach VDE 0303/Teil 4): >300°C, Erweichungstemperatur (DIN 46 453/2): >300°C; nach 30 minütiger Lagerung bei 60°C in Ethanol beträgt die Bleistifthärte (DIN 46 453/12.3) 4 H.

Die Styrolbeständigkeit wurde geprüft, indem der Lackdraht 2 Stunden in monomerem Styrol bei 120°C gelagert wurde. Danach wurde die Bleistifthärte (DIN 46 453/12.3) erneut bestimmt. Die Bleistifthärte des Lackfilmes war nach dieser Behandlung unverändert.

## Beispiel 3

850 g des Polyisocyanats I, 390 g Maleinsäuremonomethylester sowie 246 g eines Assoziates aus $\epsilon$-Caprolactam und Trishydroxyethylisocyanurat (1:2 Molar), entsprechend 25 Gew.-%, bezogen auf die Gewichtsmenge Festkörperanteil des Polyisocyanats I/Maleinsäuremonomethylester, werden in 1.592 g Cyclohexanon/N-Methylpyrrolidon (1:1 Gew.-Teile) gelöst. Der Lösung werden 1 % eines Aldimins aus Anilin/Butyraldehyd als Katalysator, berechnet auf den Festkörpergehalt, zugesetzt. Der Festkörpergehalt beträgt 40%. Die Durchlaufzeit im DIN-Becher, 4 mm, bei 23°C liegt bei 16 Sekunden.

Die Lacklösung wird in einem Vertikalofen von 4 m Länge bei einer Ofentemperatur von 400°C auf einem Cu-Draht von 0,7 mm ∅ bis zu einer Durchmesserzunahme von 50 bis 60 µm appliziert. Man erhält in einem weiten Fahrbereich (8 bis 23 m/min) einen Cu-Lackdraht mit ausgezeichneten Eigenschaften:
Bei einer Lackiergeschwindigkeit von 17 m/min liegt der tan $\delta$-Knickpunkt (VDE 0303/Teil 4) bei 200°C, die Außenfaserdehnung (DIN 46 453/8.1) beträgt 88%, der Hitzeschock (DIN 46 453/9) ist >260°C, die Erweichungstemperatur (DIN 46 453/2) beträgt 250°C und die Bleistifthärte (DIN 46 453/12.3) ist nach 30 minütiger Lagerung bei 60°C in Ethanol 4 H.

Die Styrolbeständigkeit wurde geprüft, indem der Lackdraht 2 Stunden in monomerem Styrol von 120°C gelagert wurde. Danach wurde die Bleistifthärte bestimmt.

Die Härte des Lackfilmes war nach dieser Behandlung unverändert (4 H). Dieser Lackdraht ist bei 420°C verzinnbar (DIN 46 453/17). Die Verzinnungszeit beträgt 1,5 Sekunden.

## Patentansprüche

1. Verfahren zur Herstellung von Überzügen auf Basis von Hydantoinringe enthaltenden Polymeren auf hitzeresistenten Substraten, wobei $\alpha,\beta$-ungesättigte Dicarbonsäuren bzw. deren Derivate mit blockierten, Carbodiimidgruppen und/oder Uretoniminigruppen enthaltenden Isocyanaten unter Einhaltung solcher Mengenverhältnisse der Reaktionspartner, daß sich die Summe der Äquivalente der Carbodiimidgruppen und der Uretoniminigruppen der blockierten Polyisocyanate zu der Anzahl der Äquivalente der α,β-ungesättigten Dicarbonsäuren oder Dicarbonsäure-Derivaten wie 0,1:1 - 10:1 verhalt, vorzugsweise in Gegenwart eines Katalysators bei Temperaturen von 50 bis 700°C, vorzugsweise 80 bis 500°C umgesetzt werden, dadurch gekennzeichnet, daß man die zur Ausbildung eines Polymerfilms oder -überzuges führende Umsetzung direkt auf dem Substrat durchführt.

2. Verfahren gemäß Anspruch 1, dadurch gekennzeichnet, daß man den Reaktionsgemischen als weitere Reaktionskomponente niedermolekulare mehrwertige Alkohole eines unter 400 liegenden Molekulargewichts mit 2 bis 4 Hydroxylgruppen pro Molekül in solchen Mengen einverleibt, daß, bezogen auf insgesamt 1 Äquivalent an blockierten Isocyanatgruppen und gegebenenfalls vorliegenden Uretonimingruppen bis zu 10 Äquivalente an Hydroxylgruppen vorliegen.

## Claims

1. A process for the production of coatings based on polymers containing hydantoin rings on heat resistant substrates, in which α,β-unsaturated dicarboxylic acids or derivatives thereof are reacted with blocked isocyanates containing carbodiimide groups and/or uretone imine groups, the reactants being used in such quantitative proportions that the ratio of the sum of equivalents of the carbodiimide groups and of the uretone imine groups of the blocked polyisocyanates to the number of equivalents of the α,β-unsaturated dicarboxylic acids or dicarboxylic acid derivatives is from 0.1:1 to 10:1, preferably in the presence of a catalyst, at temperatures of from 50 to 700°C, preferably from 80 to 500°C, characterised in that the reaction leading to the formation of a polymer film or coating is carried out directly on the substrate.

2. A process according to claim 1, characterised in that low molecular weight polyhydric alchols having a molecular weight below 400 and containing from 2 to 4 hydroxyl groups per molecule are incorporated in such quantities in the reaction mixture as additional reaction component that up to 10 equivalents of hydroxyl groups are present, based on a total of 1 equivalent of blocked isocyanate groups and the optionally present uretone imine groups.

## Revendications

1. Procédé pour préparer des revêtements à base de polymères contenant des noyaux hydantoînes sur des substrats pouvant résister à la chaleur, procédé selon lequel on fait réagir à des températures de 50 à 700°C, avantageusement 80 à 500°C, avantageusement en présence d'un catalyseur, des acides dicarboxyliques insaturés en α-β ou leurs dérivés avec des isocyanates bloqués, contenant des groupes carbodiimides et/ou urétone-imines, en maintenant entre les corps participant à la réaction des rapports tels qu'il existe entre la somme des équivalents des groupes carbodiimides et des groupes urétone-imines des isocyanates bloqués, et la quantité des équivalents des acides dicarboxyliques insaturés en α-β ou des dérivés de tels acides dicarboxyliques, un rapport compris entre 0,1 : 1 et 10 : 1, procédé caractérisé en ce qu'on effectue directement sur le substrat la réaction conduisant à la formation d'une pellicule ou d'un revêtement d'un polymère.

2. Procédé selon la revendication 1, caractérisé en ce qu'on incorpore au mélange réactionnel, comme autre composant de réaction, des polyalcools à bas poids moléculaire, ayant un poids moléculaire inférieur à 400 et comportant 2 à 4 groupes hydroxyles par molécule, en des quantités telles qu'il y ait, pour un équivalent au total des groupes isocyanates bloqués et des groupes urétone-imines éventuellement présents, jusqu'à 10 équivalents de groupes hydroxyles.